Europäisches Patentamt

European Patent Office

Office européen des brevets

(11) Numéro de publication : **0 398 779 B1**

(12) **FASCICULE DE BREVET EUROPEEN**

(45) Date de publication du fascicule du brevet :
16.03.94 Bulletin 94/11

(51) Int. Cl.⁵ : **G02F 1/35**

(21) Numéro de dépôt : **90401188.9**

(22) Date de dépôt : **02.05.90**

(54) **Dispositif d'amplification d'onde optique à faible bruit.**

(30) Priorité : **16.05.89 FR 8906344**

(43) Date de publication de la demande :
**22.11.90 Bulletin 90/47**

(45) Mention de la délivrance du brevet :
**16.03.94 Bulletin 94/11**

(84) Etats contractants désignés :
**DE GB IT**

(56) Documents cités :
**EP-A- 0 275 768**
**US-A- 3 988 593**
**US-A- 4 703 992**
**JOURNAL OF THE OPTICAL SOCIETY OF AMERICA, vol. 72, no. 1, janvier 1982, pages 46-51, Optical Society of America; J. FEIN-BERG: "Asymmetric self-defocusing of an optical beam from the photorefractive effect"**

(56) Documents cités :
**OPTICS LETTERS, vol. 12, no. 12, décembre 1987, pages 1029-1031, Optical Society of America; M. CRONIN-GOLOMB et al.: "Photorefractive time differentiation of cohe-rent optical images"**

(73) Titulaire : **THOMSON-CSF**
**173, Boulevard Haussmann**
**F-75008 Paris (FR)**

(72) Inventeur : **Huignard, Jean-Pierre**
**c/o THOMSON-CSF SCPI Cédex 67**
**F-92045 Paris La Défense (FR)**
Inventeur : **Rajbenbach, Henri**
**c/o THOMSON-CSF SCPI Cédex 67**
**F-92045 Paris La Défense (FR)**

(74) Mandataire : **Guérin, Michel et al**
**THOMSON-CSF SCPI B.P. 329 50, rue**
**Jean-Pierre Timbaud**
**F-92402 Courbevoie Cédex (FR)**

## Description

L'invention concerne un dispositif d'amplification d'onde optique et plus particulièrement un dispositif d'amplification de signaux optiques basé sur l'intéraction de deux ondes dans un milieu non linéaire à variation d'indice photoinduite (par exemple cristal photoréfractif). L'originalité du dispositif présenté résulte de la mise en oeuvre de nouveaux moyens de suppression du bruit propre au milieu amplificateur. Le dispositif assure l'amplification cohérente de fronts d'ondes contenant de l'information spatiale avec un excellent rapport signal/bruit dans le plan de détection.

L'invention est applicable aux dispositifs de détection, d'amplification cohérente et de conjugaison de phase de fronts d'ondes. Plus particulièrement elle est applicable à l'amplification d'images par intéraction à deux ondes dans un cristal photoréfractif.

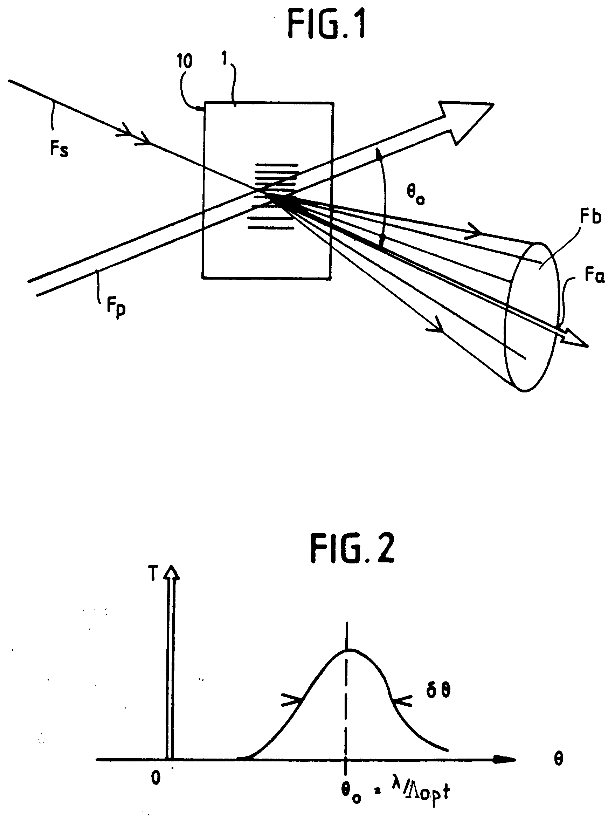

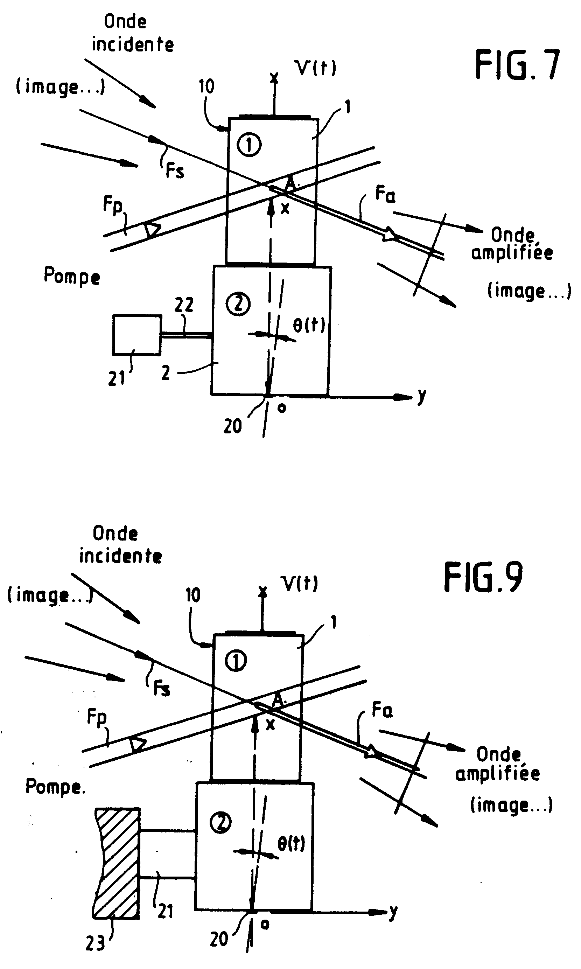

Les amplificateurs photoréfractifs (GaAs, BaTiO$_3$, LiNbO$_3$, BSO ...) possèdent intrinsèquement des coefficients de gain $\Gamma$ très élevés permettant l'amplification efficace de faisceaux sondes de très faible intensité ( $\Gamma \simeq 5$ à $15\ cm^{-1}$ après optimisation suivant les matériaux utilisés). Ces intéractions à fort gain sont parfaitement bien adaptées à la génération d'ondes conjuguées ainsi qu'à l'amplification et au traitement d'images bidimensionnelles. Cependant comme dans tout mécanisme d'amplification il existe un spectre de bruit propre au milieu non linéaire qui dégrade le rapport signal/bruit dans le plan du signal amplifié. En particulier, la contribution du bruit est d'autant plus notable que le signal incident est faible. L'origine du bruit dans ces matériaux peut être décrite comme suit : l'onde pompe incidente interfère avec les ondes générées par l'ensemble des microdéfauts du cristal non linéaire (inhomogénéités de l'indice ; rayures sur les surfaces et réflexions multiples sur les interfaces du cristal). Ces ondes élémentaires constituent autant de faisceaux sondes (ou faisceaux signal) ayant des amplitudes et des phases aléatoires. Après intéraction du type deux ondes (pompe-sonde), cet ensemble de faisceaux parasites est efficacement amplifié dans les seules directions angulaires présentant un gain élevé. On observe ainsi en sortie du cristal une figure de bruit caractéristique du cristal tel que cela est représenté sur la figure 1 où l'on voit le faisceau signal F$_s$ qui interfère avec le faisceau pompe F$_p$ pour donner un signal amplifié Fa et où l'on voit le bruit Fb. Le cristal étant éventuellement soumis à un champ électrique appliqué par l'intermédiaire d'une tension V$_{(t)}$ tel que cela est représenté en figures 7 et 9. Sur la figure 2, on voit que la largeur et la position du lobe du bruit caractérise la dépendance du coefficient de gain en fonction de la fréquence spatiale, ce qui correspond à une réponse du type passe bande selon les matériaux utilisés.

On trouve un exemple d'amplificateur de signaux optiques à milieu photoréfractif dans lequel un signal optique d'impulsions est amplifié à l'aide d'une onde de pompe dans le document EP-0-275 768.

Afin d'obtenir une amplification efficace d'une onde sonde extérieure, celle-ci doit être positionnée dans la direction angulaire correspondant au maximum de gain de l'amplificateur (par exemple $\theta = \lambda/\Lambda_{opt}$ avec $\Lambda_{opt}^{-1}$ = fréquence spatiale optimale). Si on obtient dans ces conditions une amplification efficace de l'onde sonde dans l'amplificateur photoréfractif, il résulte en conséquence, une contribution importante du bruit intrinsèque au milieu non linéaire. Le rapport signal sur bruit d'un tel amplificateur est donc limité puisque bruit et signal amplifiés sont optimisés pour les mêmes directions angulaires. Selon ces principes il paraît impossible de satisfaire simultanément aux deux conditions suivantes : fort gain sur le signal injecté et rapport signal sur bruit élevé dans le plan de l'image amplifiée. Néanmoins, les applications de ces matériaux au traitement et contrôle de faisceaux cohérents nécessitent de satisfaire à ces deux conditions contradictoires. Pour ce faire, on propose selon l'invention une nouvelle technique permettant de réduire considérablement le bruit, voire de l'éliminer pratiquement, tout en maintenant un signal amplifié d'excellente qualité. La technique repose sur un filtrage temporel des deux signaux (bruit ; signal amplifié) en tenant compte du fait que les temps de reponse des deux phénomènes peuvent être largement différents.

L'invention concerne donc un dispositif d'amplification d'onde optique à faible bruit comprenant un milieu photoréfractif recevant par une face d'entrée un faisceau signal à amplifier et un faisceau de pompe fournissant en échange un faisceau amplifié, caractérisé en ce que des moyens associés au milieu photoréfractif permettent de faire tourner le milieu photoréfractif de telle façon que la face d'entrée tourne par rapport aux faisceaux signal et pompe de manière à réduire le bruit propre au milieu photoréfractif par rapport au faisceau amplifié.

L'invention concerne également un procédé d'amplification d'onde optique à faible bruit dans lequel un milieu photoréfractif reçoit un faisceau signal à amplifier et un faisceau de pompe et fournit en échange un faisceau amplifié résultant de l'interférence du faisceau signal et du faisceau pompe, caractérisé en ce qu'on communique au milieu photoréfractif un mouvement de balancement autour d'un axe non situé dans la zone d'interférence des faisceaux signal et pompe.

Les différents objets et caractéristiques de l'invention apparaîtront plus clairement dans la description qui va suivre faite à titre d'exemple en se reportant aux figures annexées qui représentent :

- la figure 1, un dispositif d'amplification mettant en évidence le signal amplifié et un bruit d'amplification ;

- la figure 2, une courbe caractéristique de gain d'un milieu optique non linéaire ;
- la figure 3, des courbes d'établissement des réseaux d'indices associés aux interférences d'une onde pompe avec, d'une part, un faisceau signal, d'autre part, du bruit ;
- la figure 4, un système selon l'invention mettant en évidence l'influence d'une rotation de milieu photoréfractif sur la direction du bruit du dispositif d'amplification ;
- la figure 5, un système selon l'invention mettant en évidence l'influence d'une rotation sur l'amplification d'un faisceau sonde (ou signal) ;
- la figure 6, un système selon l'invention décrivant le déplacement des franges signal-pompe lors de la rotation du cristal ;
- les figures 7 et 9, des exemples de réalisation du dispositif selon l'invention ;
- la figure 8, un exemple de courbe du mouvement de rotation du milieu amplificateur.

Comme on l'a décrit précédemment, en relation avec la figure 1, l'interférence, dans un milieu non linéaire, tel que le cristal photoréfractif 1 de la figure 1, d'un faisceau sonde (ou faisceau signal) $F_s$ et d'un faisceau de pompe $F_p$ donne lieu à un signal amplifié Fa et à du bruit Fb.

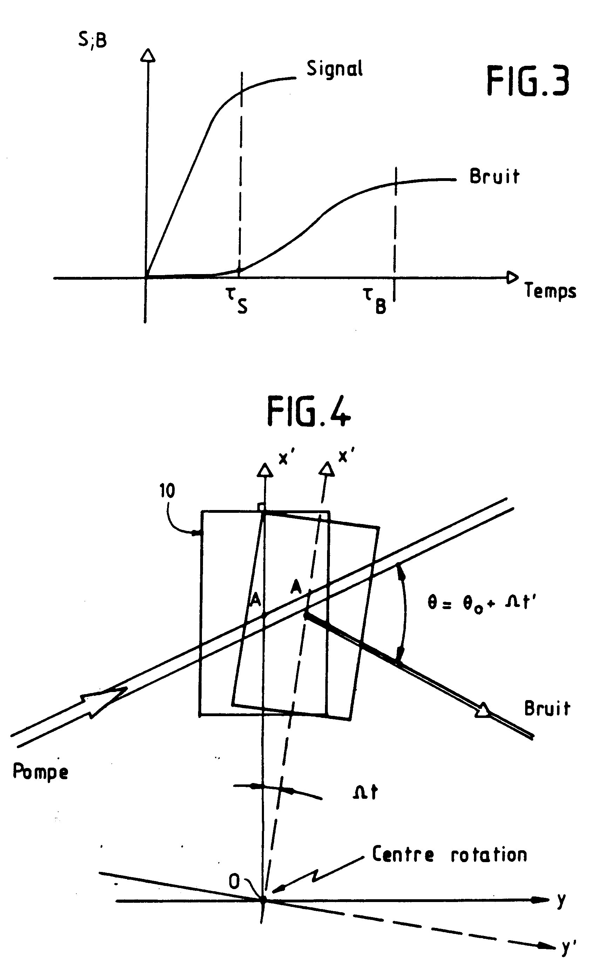

A titre d'exemple la figure 3 illustre les temps d'établissement $\tau_B$ du bruit et $\tau_S$ d'un signal amplifié après interaction à deux ondes dans un milieu 1 à base de GaAs. Tenant compte de l'inertie du phénomène de bruit, l'idée de base consiste à "brouiller" le système d'interférence correspondant au bruit en déplaçant le cristal.

L'invention prévoit donc comme cela est représenté sur les figures 4 à 7 de faire tourner le cristal photoréfractif 1 autour d'un axe 0 de telle façon que la face d'entrée 10 du cristal tourne par rapport aux faisceaux incidents.

Plus précisément, si on considère que le faisceau sonde Fs et le faisceau de pompe Fp sont orientés selon des directions contenues dans un plan perpendiculaire à la face 10 du cristal photoréfractif 1, on prévoira avantageusement que l'axe 0 soit perpendiculaire à ce plan. L'axe 0 peut être également contenu dans un plan parallèle au plan bissecteur du faisceau sonde et du faisceau pompe. Plus généralement, il suffit que l'axe 0 ait une projection non nulle sur ce plan ainsi défini.

De plus pour que le mouvement du cristal permette de perturber l'établissement des interférences dans le cristal on prévoira avantageusement que l'axe 0 soit situé en dehors du cristal et de préférence à une distance sensiblement égale à la hauteur du cristal comme cela est représenté sur les figures 4, 5 et 7.

Il résulte de l'observation des courbes d'établissement du signal amplifié et du bruit amplifié représentées en figure 3, qu'il faut que la vitesse de déplacement du cristal soit suffisante pour affecter l'amplification du bruit mais inférieur à une valeur limite pour n'affecter que très peu le mécanisme de gain sur l'onde signal qui est beaucoup plus rapide à s'établir. Sur la figure 3, on voit donc qu'il faut que le temps caractéristique de la perturbation (rotation) soit compris entre les temps caractéristiques $\tau_s$ et $\tau_B$.

La modélisation de l'effet "brouillage" du système d'interférence générant le bruit peut être décrit comme suit :

L'interférence entre l'onde pompe et une onde de bruit diffusée en A dans la direction $\theta$ par rapport à l'onde pompe s'écrit :

$$I(x) = I_o[1 + m_B \cos (2\pi/\lambda\ \theta x)] \quad (1)$$

Expression dans laquelle : $I_o$ = intensité incidente, $m_B$ taux de modulation des franges liées au bruit ; $\lambda$: longueur d'onde dans le milieu photoréfractif ($\lambda = \lambda_{o/n}$ où n est l'indice du milieu et $\lambda_o$ la longueur d'onde dans le vide), $\theta$ = angle entre les deux faisceaux dans le milieu.

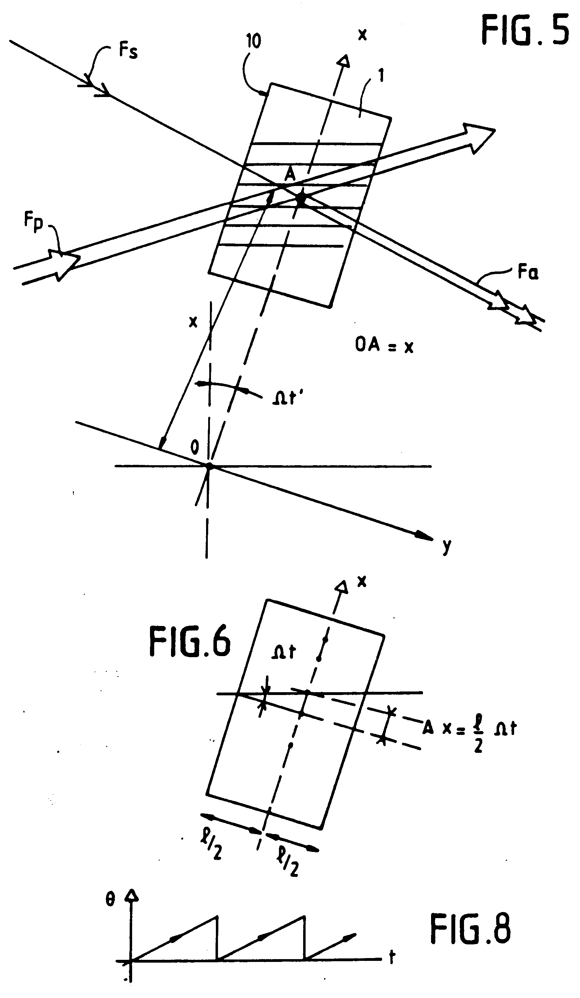

Lorsque le cristal tourne à vitesse angulaire $\Omega$ à partir de la position verticale (figures 4 et 5) la relation (1) s'écrit dans le repère x, y lié au cristal :

$$I(x,t) = I_o[1 + m \cos 2\ \pi/\lambda\ (\theta_o + \Omega t)\ x] \quad (2)$$

x étant l'abscisse du point A selon l'axe Ox.

soit :

$$I(x,t) = I_o[1 + m \cos K(x + x\Omega t/\theta_o)] \quad (3)$$

dans laquelle $K = 2\pi\theta_o/\lambda$

Tourner le cristal à vitesse angulaire $\Omega$ autour du point A d'abscisse x équivaut donc à déplacer la figure d'interférence générant le bruit à la vitesse $v_B$ telle que :

$$v_B = \Omega x/\theta_o \quad (4)$$

Lorsque la figure d'interférence se déplace à vitesse $v_b$ la variation d'indice résultant de l'effet photoréfractif se met sous la forme :

$$\Delta n(x,t) = \Delta n_s \cos(Kx + v_B t + \varphi_B)/$$
$$(1 + K^2 v^2_B \tau_B^2)^{\frac{1}{2}}$$
$$\text{avec tg } \varphi_B = K v_B \tau_B \text{ ; } K = 2\pi\ \theta_o/\lambda \quad (5)$$

$\Delta n_s$ : maximum de variation d'indice photoinduite dans le cristal.

Dans ces conditions la variation d'indice associée à la figure de bruit est négligeable lorsqu'on satisfait

à la condition :

$$K v_B \tau_B \gg 1$$

soit :

$$\Omega \gg \Omega_B$$

avec $\Omega_B = \lambda/(2\pi\tau_B x)$, $\Omega_B$ étant une vitesse angulaire à partir de laquelle le bruit est affecté.

La vitesse de déplacement correspondante pour le point A choisi au centre du cristal (0A = x) est de l'ordre de 200 $\mu$m s$^{-1}$ avec les valeurs numériques suivantes :

$$\lambda_o = 1 \ \mu m \ ; \tau_B = 100 \ ms \quad (6)$$

Lorsque le cristal tourne à cette vitesse angulaire constante faible, la période spatiale du réseau principal n'est pas affectée ($\Lambda = \lambda / \theta_o$) et le réseau d'interférence tourne également autour de l'axe 0 (figure 6). Il lui correspond une vitesse de translation des franges $v_s$ telle que :

$$v_s = \frac{\ell}{2}\Omega \quad (7)$$

l étant l'épaisseur du cristal 10 (voir figure 6).

La variation d'indice associée au réseau principal s'écrit :

$$\Delta n (xt) = m_s \Delta n_s \cos (Kx + v_s t + \varphi_s) /$$
$$(1 + K^2 v_s \tau_s^2)^{\frac{1}{2}} \quad (8)$$

$m_s$ : taux de modulation des franges signal-pompe

Le réseau principal sera donc très peu affecté par la rotation angulaire du cristal si on satisfait à la condition :

$$K v_{s \ s}\tau < 1$$

soit

$$\Omega \leqq \Omega s$$

avec

$$\Omega_s = \Lambda/\pi.\tau_s . \ell \ ; \quad (9)$$

$\Omega_s$ étant une vitesse angulaire à partir de laquelle le signal serait affecté. Les relations 6 et 9 montrent donc qu'il existe un large domaine de vitesses de rotation angulaire du cristal permettant de satisfaire simultanément aux deux conditions suivantes :

- suppression du bruit = $\Omega \gg \Omega_B$
- gain élevé sur l'onde signal injectée dans l'amplificateur photoréfractif : $\Omega \leqq \Omega_s$

Par exemple on pourra obtenir $\Omega_s = 10^2 \ \Omega_B$ avec les conditions expérimentales suivantes :

$\Lambda = 20 \ \mu m \ ; \lambda_O = 1 \ \mu m$

l = x = 10 mm ; $\tau_s = 10$ ms ; $\tau_B = 100$ ms.

La figure 7 représente un exemple de réalisation du dispositif selon l'invention. Il comporte un cristal photoréfractif 1 (tel que BSO, BaTiO$_3$, LiNb0$_3$, GaAs...) dont une face 10 reçoit un faisceau signal Fs et faisceau pompe Fp. Ces deux faisceaux sont sensiblement contenus dans un plan lui-même perpendiculaire à la face 10. Les deux faisceaux Fs et Fp interfèrent dans le cristal photoréfractif et fournissent un faisceau signal amplifié Fa.

Le cristal photoréfractif 1 est monté sur une plateforme 2 mobile autour d'un axe 0.

Des moyens de commande 21 agissent par l'intermédiaire d'une liaison 22 pour commander la rotation de la plateforme 2 autour de l'axe 0.

Cette rotation peut se faire sous la forme d'une oscillation angulaire en dents de scie telle que représentée en figure 8.

Les moyens de commande 21 peuvent être également, comme représenté en figure 9, une céramique piézoélectrique ou un bilame qui s'appuie sur une référence fixe 23 et qui sous la commande d'un signal électrique, fourni par des moyens non représentés, se déforme et commande le mouvement de rotation angulaire de la plateforme 2.

A titre d'exemple on a trouvé que pour un cristal amplificateur en GaAs et pour les valeurs suivantes :

Longueur d'onde $\lambda$ = 1,06 $\mu$m (YAG)

Longueur d'interaction l = 10 mm - 5 x 5 mm$^2$

Intensité pompe I$_p$ = 10 mW.cm$^{-2}$

Période spatiale $\Lambda_{opt}$ = 20 $\mu$m

Constantes de temps: $\tau_s$ = 10 ms ; $\tau_B$ = 100 ms

Distance à l'axe de rotation : 0A = x = 10 mm

Coefficient de gain petits signaux : $\Gamma$ = 5 cm$^{-1}$

On pourrait obtenir les résultats suivants :

$$\Omega_s = 60 \ mrd \ s^{-1}$$
$$\Omega_B = 0.2 \ mrd \ s^{-1}$$

Choix de la vitesse de rotation $\Omega$ du cristal par exemple $\Omega$ = 5 à 10 mrd s$^{-1}$

gain sur l'onde signal : x100

Le dispositif de l'invention permet d'obtenir simultanément un gain élevé et un très bon rapport signal/bruit dans des amplificateurs du type photoréfractif. L'ensemble de ces propriétés est obtenu par contrôle de la vitesse de rotation angulaire du milieu non linéaire. Les principes exposés sont transposables à tout autre milieu non linéaire permettant l'amplification cohérente de faisceaux par intéraction à deux ondes ou à quatre ondes.

Applications optroniques de ce dispositif :

- conjugaison de phase avec rapport signal bruit élevé
- détection et amplification d'ondes pour LIDAR
- amplification d'images
- cavités autoinduites démarrant sur le signal injecté et non sur le bruit.

Il est bien évident que d'autres variantes peuvent être envisagées notamment en ce qui concerne les moyens pour donner un mouvement de rotation au milieu non linéaire dans lequel interfère l'onde à amplifier et l'onde pompe ainsi qu'en ce qui concerne l'orientation de l'axe de rotation.

## Revendications

1. Dispositif d'amplification d'onde optique à faible bruit comprenant un milieu photoréfractif (1) recevant par une face d'entrée (10) un faisceau signal (Fs) à amplifier et un faisceau de pompe, fournissant en échange un faisceau amplifié (Fa), caractérisé en ce que des moyens (2) associés au milieu photoréfractif permettent de faire tourner le milieu photoréfractif autour d'un axe (20) de telle façon que la face d'entrée (10) du milieu photoréfractif tourne par rapport aux faisceaux signal et pompe de manière à réduire le bruit propre au milieu photoréfractif par rapport au faisceau amplifié.

2. Dispositif d'amplification selon la revendication 1, caractérisé en ce que le milieu photoréfractif (1) est solidaire d'une plateforme (2) qui tourne autour d'un axe (20) situé en dehors du milieu photoréfractif (1).

3. Dispositif d'amplification selon la revendication 2, caractérisé en ce qu'il comporte des moyens de commande de rotation (21) associés à la plateforme (2).

4. Dispositif d'amplification selon la revendication 3, caractérisé en ce que les moyens de commande (21, 22) comportent un dispositif de commande d'oscillation mécanique.

5. Dispositif d'amplification selon la revendication 3, caractérisé en ce que les moyens de commande (21) comportent un dispositif à base de céramique piézoélectrique.

6. Dispositif d'amplification selon la revendication 3, caractérisé en ce que les moyens de commande (21) comportent un bilame.

7. Dispositif d'amplification selon la revendication 3, caractérisé en ce que les moyens de commande de rotation (21) comportent des moyens permettant de communiquer à la plateforme (2) un mouvement de balancement.

8. Procédé d'amplification d'onde optique à faible bruit dans lequel un milieu photoréfractif reçoit un faisceau signal à amplifier et un faisceau de pompe et fournit en échange un faisceau amplifié résultant de l'interférence du faisceau signal et du faisceau pompe, caractérisé en ce qu'on communique au milieu photoréfractif un mouvement de balancement autour d'un axe non situé dans la zone d'interférence des faisceaux signal et pompe.

9. Procédé d'amplification d'onde optique selon la revendication 8, caractérisé en ce que la vitesse angulaire ($\Omega$) de balancement du milieu photoréfractif est telle que :

$$\lambda \,/\, (2\pi \, \tau_B \, x) << \Omega \leqq \Lambda \,/\, (\pi \, \tau_s \, l)$$

où

$\lambda$ = longueur d'onde du signal à amplifier;

$\Lambda$ = période spatiale d'un réseau principal;

$\tau_B$ et $\tau_s$ = les temps d'établissement respectivement du bruit et d'un signal amplifié après interaction à deux ondes ;

$x$ = l'abscisse du point d'interaction du faisceau pompe (F$_p$) et du faisceau signal (Fs) par rapport audit axe ;

I = l'épaisseur du milieu photoréfractif.

10. Dispositif d'amplification selon la revendication 2, caractérisé en ce que l'axe (0, 20) est situé par rapport au milieu photoréfractif, à une distance sensiblement égale à la hauteur du milieu photoréfractif.


**Patentansprüche**

1. Lichtwellen-Verstärkungseinrichtung mit geringem Rauschen, mit einem lichtbrechenden Medium (1), das an einer Eingangsfläche (10) einen zu verstärkenden Signalstrahl (Fs) und einen Pumpstrahl empfängt und im Austausch einen verstärkten Strahl (Fa) ausgibt, dadurch gekennzeichnet, daß mit dem lichtbrechenden Medium verbundene Mittel (2) die Drehung des lichtbrechenden Mediums um eine Achse (20) erlauben, so daß sich die Eingangsfläche (10) des lichtbrechenden Mediums in bezug auf den Signalstrahl und den Pumpstrahl dreht, derart, daß das dem lichtbrechenden Medium eigene Rauschen relativ zum verstärkten Strahl reduziert wird.

2. Verstärkungseinrichtung gemäß Anspruch 1, dadurch gekennzeichnet, daß das lichtbrechende Medium (1) mit einer Plattform (2) verbunden ist, die sich um eine Achse (20) dreht, die sich außerhalb des lichtbrechenden Mediums (1) befindet.

3. Verstärkungseinrichtung gemäß Anspruch 2, dadurch gekennzeichnet, daß sie Rotationssteuermittel (21) aufweist, die der Plattform (2) zugeordnet sind.

4. Verstärkungseinrichtung gemäß Anspruch 3, dadurch gekennzeichnet, daß die Steuermittel (21, 22) eine Einrichtung zur Steuerung einer mechanischen Schwingung enthalten.

5. Verstärkungseinrichtung gemäß Anspruch 3, dadurch gekennzeichnet, daß die Steuermittel (21) eine Einrichtung auf der Basis einer piezoelektrischen Keramik enthalten.

6. Verstärkungseinrichtung gemäß Anspruch 3, dadurch gekennzeichnet, daß die Steuermittel (21) ein Bimetall enthalten.

7. Verstärkungseinrichtung gemäß Anspruch 3, dadurch gekennzeichnet, daß die Rotationssteuermittel (21) Mittel enthalten, die die Übertragung einer Schaukelbewegung an die Plattform (2) erlauben.

8. Verfahren zur Lichtwellenverstärkung mit geringem Rauschen, in dem ein lichtbrechendes Medium einen zu verstärkenden Signalstrahl und einen Pumpstrahl empfängt und im Austausch einen verstärkten Strahl ausgibt, der sich aus der Interferenz des Signalstrahls und des Pumpstrahls ergibt, dadurch gekennzeichnet, daß dem lichtbrechenden Medium eine Schaukelbewegung um eine Achse erteilt wird, welche sich nicht in der Interferenzzone des Signalstrahls und des Pumpstrahls befindet.

9. Verfahren zur Lichtwellenverstärkung gemäß Anspruch 8, dadurch gekennzeichnet, daß die Winkelgeschwindigkeit ($\Omega$) der Schaukelbewegung des lichtbrechenden Mediums derart ist, daß:

$$\lambda / (2\pi\tau_B x) \ll \Omega \leqq \Lambda / (\pi \tau_s l)$$

wobei

| | |
|---|---|
| $\lambda$ = | Wellenlänge des zu verstärkenden Signals; |
| $\Lambda$ = | räumliche Periode eines Hauptgitters; |
| $\tau_B$ und $\tau_s$ = | Ausbildungszeit des Rauschens bzw. eines verstärkten Signals nach der Wechselwirkung mit zwei Wellen; |
| x = | Abszisse des Wechselwirkungspunktes des Pumpstrahls ($F_p$) und des Signalstrahl ($F_s$) in bezug auf die Achse; |
| l = | Dicke des lichtbrechenden Mediums. |

10. Verstärkungseinrichtung gemäß Anspruch 2, dadurch gekennzeichnet, daß sich die Achse (0, 20) von dem lichtbrechenden Medium in einem Abstand befindet, der im wesentlichen gleich der Höhe des lichtbrechenden Mediums ist.

## Claims

1.  Low-noise optical-wave amplifying device comprising a photorefractive medium (1) receiving, via an entrance face (10), a signal beam (Fs) to be amplified and a pump beam, providing in exchange an amplified beam (Fa), characterized in that means (2) associated with the photorefractive medium make it possible to turn the photorefractive medium about an axis (20) so that the entrance face (10) of the photorefractive medium turns with respect to the signal and pump beams in such a way as to reduce the noise specific to the photorefractive medium with respect to the amplified beam.

2.  Amplifying device according to Claim 1, characterized in that the photorefractive medium (1) is integral with a platform (2) which turns about an axis (20) situated outside the photorefractive medium (1).

3.  Amplifying device according to Claim 2, characterized in that it includes rotation control means (21) associated with the platform (2).

4.  Amplifying device according to Claim 3, characterized in that the control means (21, 22) include a device for control of mechanical oscillation.

5.  Amplifying device according to Claim 3, characterized in that the control means (21) include a device based on a piezoelectric ceramic.

6.  Amplifying device according to Claim 3, characterized in that the control means (21) include a bimetallic strip.

7.  Amplifying device according to Claim 3, characterized in that the rotation control means (21) include means enabling a rocking motion to be imparted to the platform (2).

8.  Low-noise optical-wave amplifying process in which a photorefractive medium receives a signal beam to be amplified and a pump beam and provides in exchange an amplified beam resulting from the interference of the signal beam and of the the pump beam, characterized in that a rocking motion about an axis which is not situated in the zone of interference of the signal and pump beams is imparted to the photorefractive medium.

9.  Optical wave amplifying process according to Claim 8, characterized in that the angular velocity ($\Omega$) of rocking of the photorefractive medium is such that:
$$\lambda \, / \, (2\pi\tau_B x) << \Omega \leqq \Lambda \, / \, (\pi \, \tau_s \, l)$$
    where
    $\lambda$ = wavelength of the signal to be amplified;
    $\Lambda$ = spatial period of a main grating;
    $\tau_B$ and $\tau_S$ = the time for establishing respectively the noise and an amplified signal after dual-wave interaction;
    x = the abscissa of the point of interaction of the pump beam ($F_p$) and of the signal beam (Fs) with respect to the said axis;
    l = the thickness of the photorefractive medium.

10. Amplifying device according to Claim 2, characterized in that the axis (0, 20) is situated, with respect to the photorefractive medium, at a distance substantially equal to the height of the photorefractive medium.

# FIG.1

# FIG.2

S;B

Signal

# FIG.3

Bruit

$\tau_S$      $\tau_B$      Temps

# FIG.4

$x'$      $x'$

10

A      A

$\theta = \theta_0 + \Omega t'$

Bruit

Pompe

$\Omega t$

Centre rotation

O      y

y'

# FIG.5

$F_s$

10

x

1

A

$F_p$

$F_a$

x

OA = x

$\Omega t'$

0

y

# FIG.6

x

$\Omega t$

$A \, x = \frac{\ell}{2} \, \Omega t$

$\ell/2$

$\ell/2$

$\theta$

# FIG.8

t

FIG. 7

FIG. 9